# EUROPÄISCHE PATENTANMELDUNG

(11) **EP 0 856 680 A1**
(43) Veröffentlichungstag der Anmeldung: **05.08.1998**
(21) Anmeldenummer: 98101737.9
(22) Anmeldetag: 02.02.1998
(51) Int. Cl.: F16D 65/16

(54) **Bremskolben einer Scheibenbremse mit einem variablen Bremsteller**

(30) Priorität: 31.01.1997 DE 19703680
(71) Anmelder: Grüter + Gut Motorradtechnik GmbH, 6275 Ballwill (CH)
(72) Erfinder: Grüter, Walter, 6003 Luzern (CH)
(74) Vertreter: Beetz & Partner Patentanwälte

(57) **Zusammenfassung**

Die Erfindung betrifft einen Bremskolben 5 einer Scheibenbremse mit einem variablen Bremsteller 12. Der Bremsteller 12 kann sich gegenüber einem Bremskolbenkörper 7 verschieben bzw. verdrehen, so daß eine Aufweitung des Bremssattels 2 bei einem Bremsvorgang ausgeglichen werden kann. Dadurch ist gewährleistet, daß der Bremsbelag 23 schon von Beginn der Bremsung an vollflächig mit der Bremsscheibe 24 in Kontakt kommt. Dadurch wird zum einen ein Verziehen der Bremsscheibe verhindert, wodurch die Standzeit derselben erhöht wird. Weiterhin kann dadurch auch die übertragene Bremskraft erhöht werden, da ständig mit der vollen zur Verfügung stehenden Reibfläche des Bremsbelags 23 gebremst wird.

## Beschreibung

Die Erfindung betrifft einen Bremskolben für eine Scheibenbremse eines Fahrzeugs, wobei der Bremskolben insbesondere einen variablen Bremsteller aufweist, der eine Aufweitung des Bremssattels ausgleicht.

Die gemäß dem Stand der Technik bekannten Scheibenbremsen sind Reibbremsen mit einer scheibenförmigen Reibfläche. Meist werden hierbei Bremsbacken beidseitig in einem Bremssattel an der Bremsscheibe angeordnet. In dem Bremssattel sind Bremszylinder angeordnet, die jeweilig Bremsbacken an die Bremsscheibe bei einem Bremsvorgang pressen. Je nach Ausführung unterscheidet man Fest- oder Schwimmsattel-Scheibenbremsen. Die Vorteile der Scheibenbremse liegen trotz örtlich höherer Temperaturen und größerer Anpreßkräfte (durch die kleinere Fläche der Bremsbeläge) als bei der Trommelbremse darin, daß sie ein geringeres Fading (Verringerung des Bremsmoments mit steigender Temperatur hat), weil sie besser von innen und außen gekühlt werden kann. Ferner sind Wartung und Belagwechsel einfacher.

Ein Nachteil derartiger Scheibenbremsen liegt darin, daß konstruktionsbedingt der Bremssattel immer U-förmig ausgebildet sein muß, um die Bremsscheibe zu umgreifen. Dies bedeutet, daß sich bei einem Bremsvorgang die beiden Schenkel des U's durch die auf die Bremsscheibe aufgebrachte Bremskraft nach außen verformen. Neben weiteren Effekten trifft dadurch beispielsweise der Bremsbelag nicht mehr mit seiner gesamten Fläche auf die Bremsscheibe, so daß unter anderem die Bremsscheibe einer ungleichmäßigen thermischen Belastung ausgesetzt ist. Diese thermische Belastung ist radial außen größen als radial innen. Durch die aus den unterschiedlichen thermischen Belastungen und damit unterschiedlichen Temperaturen resultierenden unterschiedlichen Wärmeausdehnungen der Bremsscheibe kann es zum Verzug der Bremsscheibe kommen. Dies kann dann beispielsweise zu einer reduzierten Bremsleistung, zu einer ungleichmäßigen und damit schlechteren Bremsleistung, zu einer Reifenunwucht, usw., führen.

Die Aufgabe der Erfindung liegt darin, einen Bremskolben für eine Scheibenbremse eines Fahrzeugs und eine Scheibenbremse mit einem solchen Bremskolben zu schaffen, mit denen eine verbesserte Bremswirkung erzielt und eine vergrößerte Bremsscheibenstandzeit erreicht werden können.

Die Aufgabe wird gemäß den unabhängigen Patentansprüchen gelöst. Die abhängigen Patentansprüche zeigen vorteilhafte Ausführungsformen und Weiterentwicklungen der Erfindung auf.

Gemäß der Erfindung weist der Bremskolben für eine Scheibenbremse eines Fahrzeugs an seiner der Bremsbacke zugewandten Seite ein bewegliches Element auf, das bei einem Bremsvorgang eine Bremskraftübertragung auf eine Bremsbacke durchführt. Erfindungsgemäß kann somit ein variabler Bremskolben geschaffen werden, der eine Verformung des Bremssattels ausgleicht.

Erfindungsgemäß kann das bewegliche Element weiterhin über ein Bauteil mit einem Bremskolbenkörper verbunden sein. Dieses Bauteil dient dazu, daß sich das bewegliche Element gegenüber dem Bremskolbenkörper bewegen bzw. verdrehen kann. Über dieses Bauteil kann weiterhin die Bremskraft von dem Bremskolbenkörper auf das bewegliche Element übertragen werden. Durch das Vorsehen eines getrennten Bauteils, das weder einstückig mit dem beweglichen Element, noch einstückig mit dem Bremskolbenkörper ausgebildet ist, kann die Wärmeleitung zwischen dem beweglichen Element und dem Bremskolbenkörper verringert werden.

Erfindungsgemäß kann das Bauteil eine Kugel bzw. Gelenkkugel sein. Es ist jedoch auch möglich, das Bauteil als ein elastisches Element auszubilden, welches in dem Bremskolbenkörper geeignet verankert ist. Durch die Elastizität des Bauteils könnte dann das bewegliche Element entsprechend der Aufweitung des Bremssattels geneigt werden, um dieselbe auszugleichen. Anstatt das Bauteil vorzusehen, könnte der Bremskolbenkörper auch mit einer derartigen inneren Abschlußfläche an einer Vorstehung versehen sein, daß das bewegliche Element direkt mit dieser Abschlußfläche in Kontakt kommmt.

Erfindungsgemäß kann die Gelenkkugel mit einer Aufnahmefläche des beweglichen Elements und einer Auflagefläche des Bremskolbenkörpers in Kontakt stehen, wobei die Aufnahme- und die Auflagefläche eine der Kugel angepaßte Form aufweisen können. Durch die entsprechenden Ausformungen in dem beweglichen Element und in dem Bremskolbenkörper kann gewährleistet werden, daß sich das bewegliche Element möglichst gut bewegen läßt und daß eine gleichbleibende Kontaktfläche zwischen dem Bremskolbenkörper und der Kugel bzw. zwischen dem beweglichen Element und der Kugel bei einer Bewegung des beweglichen Elements erhalten wird. Damit ist unter anderem gewährleistet, daß es bei der Übertragung der Bremskraft nicht zu überhöhten Flächenpressungen durch eine Verminderung der Übertragungsfläche kommt. Weiterhin kann dadurch erreicht werden, daß sich das bewegliche Element bei einer Bewegung nicht in dem Bremskolbenkörper verklemmt, da es auf einer Kreisbahn bzw. entlang einer Kugelfläche mit einem geeigneten Radius bewegt wird.

Erfindungsgemäß kann das bewegliche Element weiterhin ein rotationssymmetrischer Bremsteller sein. Durch die Ausbildung des beweglichen Elements als Bremsteller kann eine sichere und gleichmäßige Kraftübertragung auf die Bremsbacke erhalten werden. Der Bremsteller kann weiterhin eine gekrümmte Außenfläche aufweisen, die mit einem O-Ring in Kontakt stehen kann, der in einer Ringnut des Bremskolbenkörpers gehalten werden kann. Durch den O-Ring ist es möglich, den Bremsteller an dem Bremkolbenkörper zu halten und es wird weiterhin das Eindringen von Schmutz, Feuchtigkeit, usw. in den Bremskolbenkörper vermieden.

Der Bremsteller kann weiterhin einen Außenrand aufweisen, der mit der Bremsbacke in Kontakt kommen kann. Durch die Ausbildung dieses Außenrands wird die Wärmeübertragungsfläche von der Bremsbacke zu dem Bremskolben reduziert. Weiterhin wird innerhalb des Außenrands eine Luftfläche gebildet, welche eine wärmeisolierende Wirkung aufweist. Durch diese Maßnahmen kann gewährleistet werden, daß sich der Bremskolben nicht zu stark aufheizt und dadurch zu einer Überhitzung einer Bremsflüssigkeit führt, was wiederum ein Versagen oder eine Verminderung der Bremsleistung zur Folge hätte.

Erfindungsgemäß können der Bremskolben und/oder der Bremsteller aus einer Aluminiumlegierung nach der Spezifikation DIN 7075 bestehen. Für die Kugel könnte Stahl verwendet werden. Natürlich können der Bremskolbenkörper, der Bremsteller und/oder die Gelenkkugel auch aus anderen Materialien oder Materialgemischen bestehen, wie beispielsweise Titan, Kunststoff oder Keramik.

Erfindungsgemäß ist weiterhin eine Scheibenbremse vorgesehen, die einen Bremssattel aufweist, welcher zumindest zwei Bremszylinder mit Bremskolben besitzt, wobei die Bremskolben an ihrer der Bremsbacke zugewandten Seite jeweils ein bewegliches Element aufweisen können, das bei einem Bremsvorgang eine Bremskraftübertragung auf die Bremsbacke durchführt.

Durch den Einsatz des erfindungsgemäßen Bremskolbens kann ein thermischer Verzug der Bremsscheibe vermieden werden. Dadurch wird die Standzeit der Bremsscheibe erhöht. Weiterhin kann ein ungleichmäßiger Abrieb sowohl der Bremsscheibe als auch des Bremsbelags vermieden werden. Dadurch kann ein sichereres Bremsen und eine Erhöhung der Bremsleistung erzielt werden.

Insbesondere kann durch die Erfindung gewährleistet werden, daß der Bremsbelag immer mit seiner gesamten Fläche mit der Bremsscheibe in Kontakt steht, auch wenn der Bremssattel bzw. die Bremszange aufmacht. Dadurch kann mit dem variablen Bremskolben, gegenüber dem Stand der Technik, eine verbesserte Bremswirkung erreicht werden, da ständig die maximale Reibfläche zur Verfügung steht bei einer gleichzeitig erzielten höheren Standzeit der Bremsscheibe.

Im folgenden wird die Erfindung beispielhaft anhand von schematischen Zeichnungen näher beschrieben. Es zeigen:
- Fig. 1: eine schematische Ansicht einer erfindungsgemäßen Scheibenbremse, die einen variablen Bremskolben verwendet, wobei keine Bremskraft ausgeübt wird und somit der Bremssattel nicht nach außen gebogen ist, und
- Fig. 2: eine im wesentliche identische Darstellung, wobei jedoch ein Bremszustand gezeigt ist, bei dem sich der Bremssattel nach außen verformt.

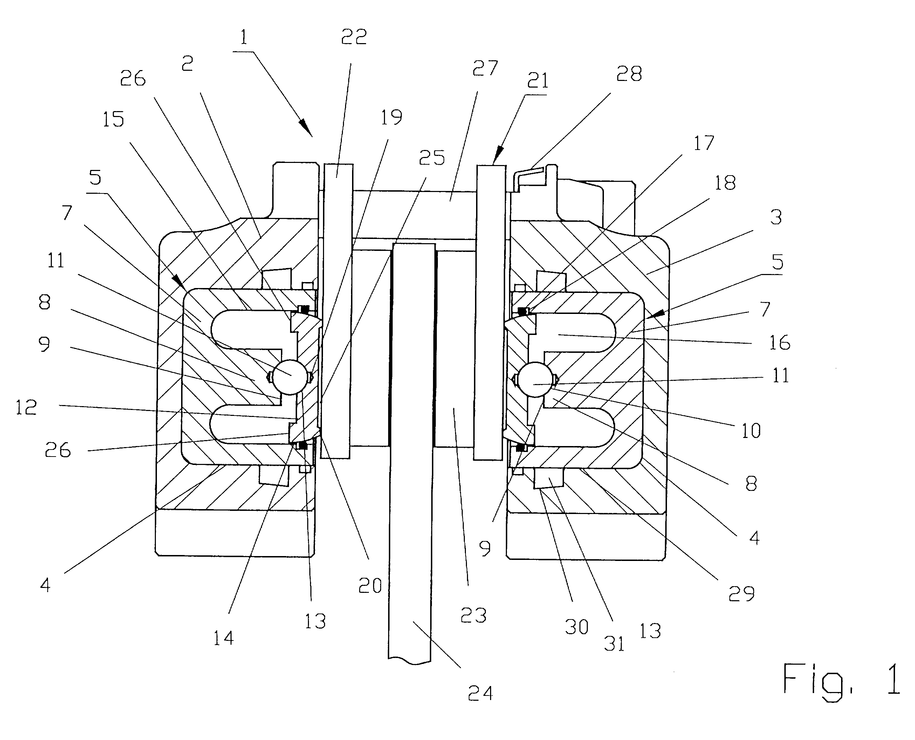

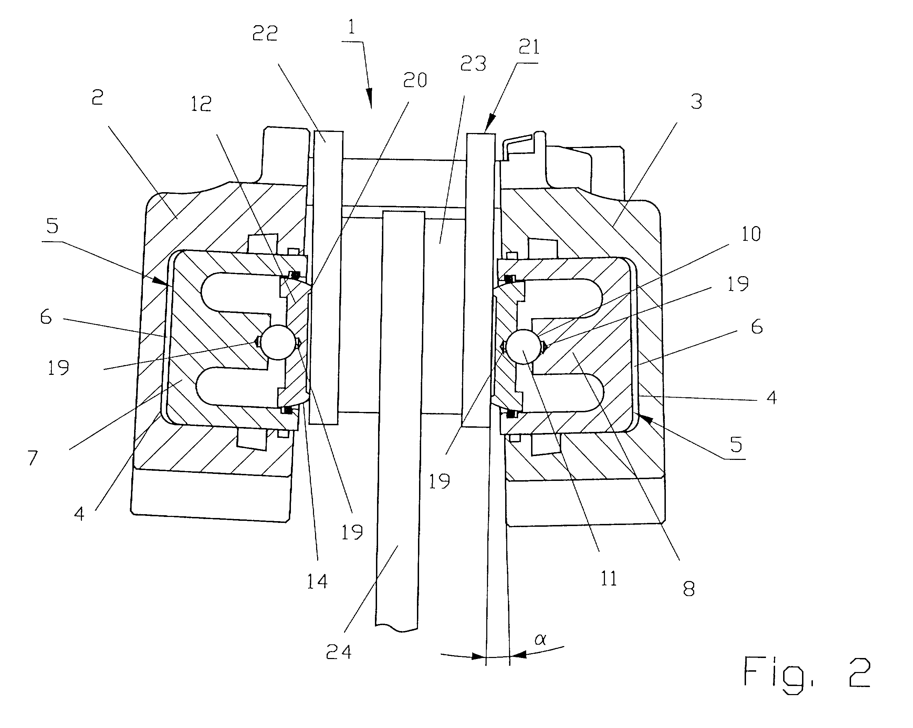

In der Fig. 1 ist ein Bremssattel 1 einer Scheibenbremse dargestellt. Der Bremssattel 1 weist ein Deckelgehäuse 2 und ein Flanschgehäuse 3 auf. Das Deckelgehäuse 2 und das Flanschgehäuse 3 sind über entsprechende Schrauben miteinander fest verbunden (nicht dargestellt). In dem Deckelgehäuse 2 und in dem Flanschgehäuse 3 ist jeweils zumindest ein Bremszylinder 4 vorgesehen. In diesem Bremszylinder 4 ist jeweils ein Bremskolben 5 angeordnet. Der Bremskolben 5 kann über nicht dargestellte Hydraulikleitungen durch ein Hydraulikfluid bzw. eine Bremsflüssigkeit 6 (siehe Fig. 2) bewegt werden. Der Bremskolben 5 weist einen Bremskolbenkörper 7 mit einer Vorstehung 8 auf. Diese Vorstehung 8 erhebt sich rotationssymmetrisch bzw. zylindrisch innen aus dem Bremskolbenkörper 7.

An einer Abschlußfläche 9 der Vorstehung 8 ist eine kugelförmige Auflagefläche 10 gebildet, die sich nach innen in die Vorstehung 8 erstreckt. In der Auflagefläche 10 sitzt fest oder verschieb- bzw. verdrehbar eine Gelenkkugel 11. Die Gelenkkugel 11 steht wiederum in Kontakt mit einem Bremsteller 12, und zwar über eine kugelförmig ausgebildete Aufnahmefläche 13, die sich nach innen in den Bremsteller 12 erstreckt.

Die Aufnahmefläche 13 ist derart angeordnet, daß sich die Symmetrieachse derselben mit der Symmetrieachse des Bremstellers 12 deckt. Dasselbe gilt für die Auflagefläche 10, die am Bremskolbenkörper 7 ausgebildet ist.

Der Bremsteller 12 weist eine Außenfläche 14 auf, die spherisch bzw. kugelförmig ausgebildet ist. Der Mittellpunkt dieser Kugelform liegt im Mittelpunkt der Gelenkkugel 11, so daß es bei einer Bewegung des Bremstellers 12 nicht zu einer Verkantung desselben an einer Außenwand 15 eines Hohlraums 16 kommt. Der Hohlraum 16 ist rotationssymmetrisch um die Vorstehung 8 in dem Bremskolbenkörper 7 gebildet und wird durch die Unterseite des Bremstellers 12 und einen O-Ring 17 begrenzt. Der O-Ring 17 ist in eine Ringnut 18 in der Außenwand 15 eingesetzt.

In der Auflagefläche 10 und in der Aufnahmefläche 13 kann jeweils eine Bohrung 19 vorgesehen sein. Die Bohrung 19 dient zur Aufnahme und zum Halten von Fett, um eine gute Bewegbarkeit des Bremstellers 12 gegenüber dem Bremskolbenkörper 7 zu gewährleisten.

Der Hohlraum 16 ist aus Gewichteinsparungsgründen ausgebildet. Der Hohlraum 16 kann jedoch, sofern zweckmäßig, mit geeigneten Fluiden gefüllt werden, um etwa eine Dämpfung des Bremstellers 12 zu erzielen. In dem Hohlraum 16 kann zudem ein Fluid eingebracht werden, welches einen niedrigen Wärmeleitungswert aufweist, um eine Weiterleitung der entstehenden Reibungswärme zu erschweren.

Der Bremsteller 12 weist weiterhin an seiner Außenseite einen Außenrand 20 auf. Durch die Ausbildung des Außenrands 20 wird die mit einem Bremsbacken 21 in Kontakt stehende Fläche minimiert. Die Bremsbacke 21 besteht aus einer Bremsbackengrundplatte 22 und einem Bremsbelag 23. Beim Bremsvorgang, bei dem der Bremskolben 5 durch die Bremsflüssigkeit 6 in Richtung auf den Bremsbacken 21 gedrückt wird, kommt der Bremsbelag 23 mit einer Bremsscheibe 24 in Kontakt. Hierbei bildet sich innerhalb des Außenrands 20 des Bremstellers 12 ein Luftpolster 25, das eine wärmeisolierende Wirkung besitzt.

Der Bremsteller 12 weist weiterhin an seiner Innenseite einen Innenrand 26 auf. Dieser Innenrand 26 dient unter anderem zur Vorsehung einer genügend großen gekrümmten Außenfläche 14 des Bremstellers 12, so daß eine ausreichende Bewegung des Bremstellers 12 möglich ist, ohne daß derselbe außer Kontakt mit dem O-Ring 17 gelangt.

An dieser Stelle sei angemerkt, daß der Drehpunkt des Bremstellers 12 dadurch optimiert werden kann, daß derselbe soweit als möglich in Richtung auf die Bremsbackengrundplatte 22 zu bewegt wird. Dadurch kann die Bewegung des Bremstellers 12 relativ zur Bremsbackengrundplatte 22 minimiert werden. Dies führt weiterhin zu einer Minimierung von Bremsleistungsverlusten.

Die Bremsbacken 21 sind über einen Führungsbolzen 27 geführt, wobei dieser durch nicht dargestellte Bohrungen in der Bremsbackengrundplatte 22 verläuft. Der Führungsbolzen 27 ist durch einen Sicherungsring 28 an dem Bremssattel 1 gesichert.

In einer Innenwand 29 des Bremszylinders 4 ist eine Nut 30 ausgebildet, die eine Gummidichtung 31 aufnimmt. Diese Gummidichtung sorgt für eine Abdichtung des Hydraulikfluids gegenüber der Umgebung.

In der Fig. 2 ist eine zu der in der Fig. 1 dargestellten Scheibenbremse im wesentlichen identische Anordnung dargestellt. Im Vergleich zur Fig. 1 ist jedoch in der Fig. 2 eine Bremsstellung gezeigt. Die Bremsbeläge 23 kommen daher in Kontakt mit der Bremsscheibe 24. Durch das Aufbringen eines entsprechenden Drucks auf die Bremsflüssigkeit 6 wird der Bremskolben 5, wie dargestellt, etwas aus dem Bremszylinder 4 herausgedrückt. Die von der Bremsflüssigkeit 6 auf die Unterseite des Bremskolbens 5 ausgeübte Kraft wird nun über die Auflagefläche 10 in der Vorstehung 8 auf die Gelenkkugel 11 übertragen. Diese Bremskraft wird weiterhin von der Gelenkkugel 11 über die Aufnahmefläche 13 in den Bremsteller 12 weitergeleitet und dann über den Außenrand 20 auf die Bremsbackengrundplatte 22 übertragen. Dadurch kommt der an der Bremsbackengrundplatte 22 angeordnete Bremsbelag 23 mit der Bremsscheibe 24 in Kontakt.

Durch die große Bremskraft, welche über die Bremsflüssigkeit 6 auf den Bremszylinder 4 ausgeübt wird, kommt es zu einer Aufweitung des Bremssattels 1. Das bedeutet, daß sich die Unterseiten (bezogen auf die Zeichnung) des Deckelgehäuses 2 und des Flanschgehäuses 3 nach außen bewegen. Bezüglich der Achse der Bremsscheibe 24 kann eine Aufweitung um einen bestimmten Winkel α beobachtet werden, der von der wirkenden Bremskraft und dem eingesetzten Material abhängt.

Durch Versuche wurde beobachtet, daß sich die Unterseiten der Gehäuseteile des Bremssattels 1 jeweils um bis zu 0,25 mm nach außen bewegen. Dies ergibt dann beispielsweise etwa einen Winkel α von etwas über 1°. Die obigen Zahlenangaben sind nur als Beispiele zu verstehen.

Durch die oben genannte und in der Fig. 2 dargestellte Aufbiegung des Bremssattels 1 käme es nun gemäß dem Stand der Technik, wie in der Beschreibungseinleitung aufgeführt, zu einem ungleichmäßigem Aufsetzen des Bremsbelags 23 auf die Bremsscheibe 24. Insbesondere würde die Oberseite des Bremsbelags 23 aufgrund der Nach-Außen-Biegung des Bremssattels 1 zuerst auf die Bremsscheibe 24 treffen. Dies führt zu der schon genannten ungleichmäßigen thermischen Belastung und damit zum Verzug der Bremsscheibe 24. Natürlich wird dadurch auch, wie schon erwähnt, die Bremsleistung vermindert.

Durch die Erfindung kann nun, wie dargestellt, erzielt werden, daß immer ein ganzflächiger Kontakt des Bremsbelags 23 mit der Bremsscheibe 24 gewährleistet ist. Dadurch, daß der Bremsteller 12 bewegbar, bzw. verdrehbar an dem Bremskolbenkörper 7 vorgesehen ist, kann der sich durch die Aufbiegung des Bremssattels 1 ausbildende Winkel α von dem Bremsteller 12 aufgenommen und ausgeglichen werden.

Dadurch wird, wie oben schon angedeutet, eine gleichmäßige thermische Belastung der Bremsscheibe erhalten. Dadurch kann die Standzeit der Bremsscheibe wesentlich erhöht werden. Zudem kommt es zu einer Erhöhung der Bremsleistung verglichen mit dem Einsatz von Standardkolben, da schon von Beginn an die gesamte Reibfläche des Bremsbelags 23 zur Verfügung steht.

Es soll an dieser Stelle angemerkt werden, daß die in den Figuren dargetellte Einbaulage der Bremsbeläge 23 zu den Bremskolben 5 nur ein konstruktives Beispiel ist. Die Symmetrieachse der Bremskolben 5 könnte sich auch mit der Mittellinie des äußeren und inneren Rings des Bremsbelags 23 überlagern oder sogar darüber liegen, sofern zweckmäßig.

Weiterhin sei aufgeführt, daß er Einsatz des erfindunsgemäßen Bremskolbens als Ersatz für alle gängigen Scheibenbremskolben dienen kann, da lediglich ohne einen großen Arbeitsaufwand die Bremskolben ausgetauscht werden müßten.

Natürlich kann die erfindungsgemäße Scheibenbremse bzw. der erfindungsgemäße Bremskolben für sämtliche Fahrzeuge verwendet werden, beispielsweise für Motorräder, Kraftfahrzeuge und Flugzeuge.

## Patentansprüche

1. Bremskolben für eine Scheibenbremse eines Fahrzeugs, der in einem Bremszylinder (4) geführt ist und mit einer Bremsbacke (21) in Kontakt kommt, um die Bremsbacke (21) bei einem Bremsvorgang gegen eine Bremsscheibe (24) zu drücken,
dadurch **gekennzeichnet** , daß
der Bremskolben (5) an seiner der Bremsbacke (21) zugewandten Seite ein bewegliches Element (12) aufweist, das bei einem Bremsvorgang eine Bremskraftübertragung auf die Bremsbacke (21) durchführt.

2. Bremskolben nach Anspruch 1,
dadurch gekennzeichnet, daß
das bewegliche Element (12) über ein Bauteil (11) mit einem Bremskolbenkörper (7) verbunden ist.

3. Bremskolben nach Anspruch 1 oder 2,
dadurch gekennzeichnet, daß
das Bauteil (11) eine Gelenkkugel ist.

4. Bremskolben nach zumindest einem der Ansprüche 1 bis 3,
dadurch gekennzeichnet, daß
die Gelenkkugel (11) mit einer Aufnahmefläche (13) des beweglichen Elements (12) und einer Auflagefläche (10) des Bremskolbenkörpers (7) in Kontakt steht, wobei die Aufnahme- und die Auflagefläche (13, 10) eine der Gelenkkugel (11) angepaßte Form aufweisen.

5. Bremskolben nach zumindest einem der Ansprüche 1 bis 4,
dadurch gekennzeichnet, daß
das bewegliche Element (12) ein rotationssymmetrischer Bremsteller ist.

6. Bremskolben nach Anspruch 5,
dadurch gekennzeichnet, daß
der Bremsteller (12) eine abgerundete Außenfläche (14) aufweist.

7. Bremskolben nach Anspruch 5 oder 6,
dadurch gekennzeichnet, daß
der Bremsteller (12) einen Außenrand (20) aufweist, der mit der Bremsbacke (22) in Kontakt kommt.

8. Bremskolben nach zumindest einem der Ansprüche 5 bis 7,
dadurch gekennzeichnet, daß
die Außenfläche (14) mit einem O-Ring (17) in Kontakt steht, der in einer Ringnut (18) des Bremskolbenkörpers (7) gehalten ist.

9. Bremskolben nach zumindest einem der Ansprüche 1 bis 8,
dadurch gekennzeichnet, daß
der Bremskolben (5) und der Bremsteller (12) aus der Aluminiumlegierung DIN 7075 bestehen.

10. Scheibenbremse mit einem Bremssattel (1), der zumindest einen Bremszylinder (4) mit einem Bremskolben (5) aufweist,
dadurch gekennzeichnet, daß
der Bremskolben (5) gemäß zumindest einem der Ansprüche 1 bis 9 ausgebildet ist und eine Aufweitung des Bremssattels (1) ausgleicht.
